Europäisches Patentamt

European Patent Office

Office européen des brevets

(11) Veröffentlichungsnummer: **0 317 708**
**A1**

(12) **EUROPÄISCHE PATENTANMELDUNG**

(21) Anmeldenummer: **88111943.2**

(22) Anmeldetag: **25.07.88**

(51) Int. Cl.⁴: **H04M 1/72 , H04Q 7/04 , H04B 7/26**

(30) Priorität: **21.11.87 DE 3739507**

(43) Veröffentlichungstag der Anmeldung:
**31.05.89 Patentblatt 89/22**

(84) Benannte Vertragsstaaten:
**AT CH DE ES FR GB IT LI NL SE**

(71) Anmelder: **ROBERT BOSCH GMBH**
**Postfach 10 60 50**
**D-7000 Stuttgart 10(DE)**

(72) Erfinder: **Löscher, Günther, Dipl.-Ing.**
**Krontalstrasse 82**
**D-1000 Berlin 49(DE)**

(74) Vertreter: **Schmidt, Hans-Ekhardt, Dipl.-Ing.**
**Robert Bosch GmbH Geschäftsbereich**
**Mobile Kommunikation Patent- und**
**Lizenzabteilung Forckenbeckstrasse 9-13**
**D-1000 Berlin 33(DE)**

(54) **Funkverfahren für schnurlose Telefone.**

(57) Der Erfindung liegt die Aufgabe zugrunde, eine für schnurlose Telefone vorgegebene Zahl (A) von Funkkanälen auf eine größere Zahl (B) zu erweitern, ohne daß dadurch der Zeitbedarf für einen Verbindungsaufbau verlängert wird.

Diese Aufgabe wird erfindungsgemäß dadurch gelöst, daß die für jedes schnurlose Telefon vorgesehene Kodenummer (N) einen individuellen Startkanal (SK1) bestimmt. Dabei wird von der Beziehung SK = N . modB ausgegangen, wobei N die Kodenummer und B die gewünschte höhere Zahl von Funkkanälen ist. Das schnurlose Telefon tastet dann die Funkkanäle von dem betreffenden individuellen Startkanal ausgehend nur A Funkkanäle ab, wobei A die Zahl der bisher vorhandenen Funkkanäle ist.

Das Funkverfahren eignet sich insbesondere für das schnurlose Telefonnetz der Deutschen Bundespost.

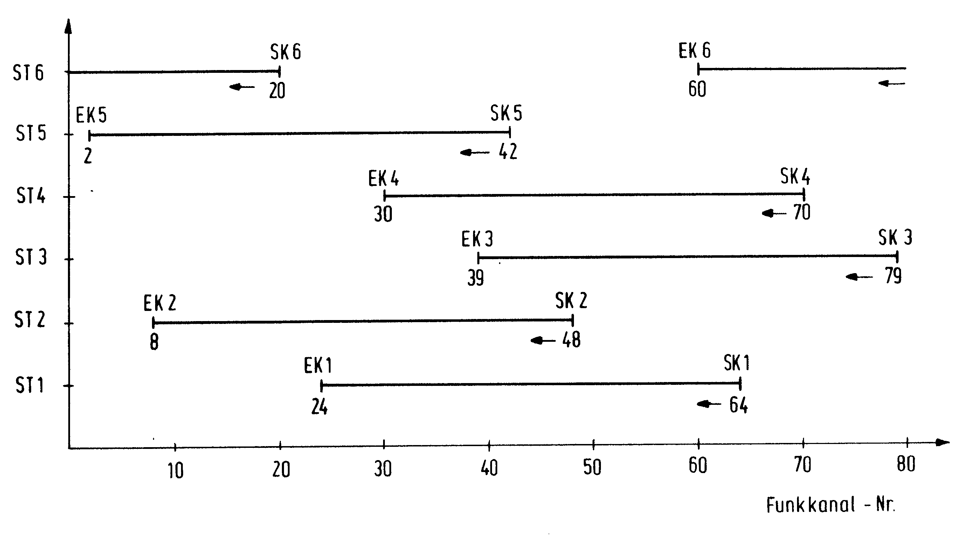

In der Zeichnung ist die erfindungsgemäße Verteilung der Funkkanäle dargestellt.

## Funkverfahren für schnurlose Telefone

Die Erfindung betrifft ein Funkverfahren nach dem Oberbegriff des Anspruchs 1.

### Stand der Technik

Es ist ein Funkverfahren für schnurlose Telefone bekannt (NTZ, 1985, Heft 7, Seiten 468 bis 471), bei dem je ein Funkgerätepaar aus Basisapparat und zugehörigem Handapparat über jeweils einen aus einer vorgegebenen Zahl von Funkkanälen gewählten Funkkanal in Verbindung treten kann. Zu diesem Zweck tastet zum Beispiel ein Abtaster in steter Folge die vorhandenen Funkkanäle nach einem freien Funkkanal ab, bleibt auf dem freien Funkkanal stehen und teilt die Funkkanalnummer dem zugehörigen Handapparat mit. Da die Zahl der Funkkanäle fest vorgegeben ist, kann der Wunsch nach einer Erhöhung der Zahl der Funkkanäle nicht ohne Nachteil erfüllt werden, der darin besteht, daß das Abtasten der größeren Zahl von Funkkanälen in der Regel auch eine längere Zeit beansprucht, die den normalen Betriebsablauf behindert.

### Aufgabe

Der Erfindung liegt die Aufgabe zugrunde, ein Funkverfahren der gattungsgemäßen Art derart weiterzubilden, daß in Ballungsgebieten die Zahl der verfügbaren Funkkanäle für schnurlose Telefone erhöht werden kann, ohne daß dadurch der zeitliche Betriebsablauf bzw. die Wartezeiten bis zum Aufbau einer Gesprächsverbindung verlängert werden.

### Lösung und erzielbare Vorteile

Diese Aufgabe wird bei einem gattungsgemäßen Funkverfahren durch die kennzeichnenden Merkmale des Anspruchs 1 gelöst.

Die mit der Erfindung erzielbaren Vorteile bestehen insbesondere darin, daß bei einer Erhöhung der Zahl der in einem Funknetz für schnurlose Telefone vorhandenen Funkkanäle keine Beeinträchtigung des zeitlichen Betriebsablaufs auftritt.

Ein bevorzugtes Anwendungsgebiet für die Erfindung ist das Fernsprechnetz der Deutschen Bundespost, bei dem die Zahl der verfügbaren Funkkanäle für schnurlose Telefone von zur Zeit vierzig auf die doppelte Zahl erhöht werden soll.

### Beschreibung eines Ausführungsbeispiels

Ein Ausführungsbeispiel der Erfindung ist in der Zeichnung an Hand einer einzigen Figur dargestellt und wird im folgenden näher beschrieben. Die Figur zeigt ein Diagramm, aus dem die erfindungsgemäße Verteilung der Funkkanäle für schnurlose Telefone hervorgeht.

Ein Funknetz für schnurlose Telefone soll beispielsweise von A = 40 Funkkanälen auf B = 80 Funkkanäle erweitert werden. Jedes aus Basisapparat und Handapparat bestehende Funkgerätepaar bzw. jedes schnurlose Telefon hat - wie schon bisher üblich - eine eigene Kodenummer, die bei mikrorechnergesteuerten schnurlosen Telefonen in den Rechner eingegeben und in einem zu dem Rechner gehörenden Speicher abgespeichert wird.

Die Kodenummer, zum Beispiel $N1 = 4690$, eines der schnurlosen Telefone des Funknetzes bestimmt nun dessen individuellen Startkanal $SK1$, der an Hand der Beziehung

$SK = N \cdot \bmod B$, das heißt zum Beispiel

$SK1 = N1 \cdot \bmod B = 4690 \cdot \bmod 80 = 64$

ermittelt wird, wobei B die gewünschte höhere Zahl der Funkkanäle ist. Von dem ermittelten Startkanal $SK1 = 64$ ausgehend, werden nacheinander, wie bisher bei der kleineren Funkkanalzahl, A = 40 Funkkanäle abgetastet, und zwar vorzugsweise in Richtung auf niedrigere Funkkanalzahlen; vgl. Pfeilrichtungen in der Figur. In dem gewählten Beispiel beginnt die Abtastung bei dem Startkanal $SK1 = 64$ und endet bei einem um 40 Kanäle darunterliegenden Endkanal $EK1 = 24$. Den individuellen Startkanal $SK$ eines schnurlosen Telefons berechnet der in dem schnurlosen Telefon vorhandene Mikrorechner und speichert ihn ebenfalls wie die individuelle Kodenummer.

Da der Startkanal für jedes schnurlose Telefon unterschiedlich ist, kommt man beim Abtasten der Funkkanäle mit der kleineren Funkkanalzahl, im vorliegenden Beispiel also mit A = 40 Funkkanälen, aus. Damit bleiben auch die Betriebszeiten für den Verbindungsaufbau und den Stand-by-Betrieb in den Abtastpausen gleich. Die Funkgeräte müssen jedoch so programmierbar sein, daß sie auf je einen von 80 Funkkanälen einstellbar sind.

Im übrigen wird das 80 Funkkanäle umfassende Frequenzband in der Regel gleichmäßig ausgenutzt, so daß sich die 40 schnurlosen Telefone nicht gegenseitig störend beeinflussen. Weiterhin ist es möglich, daß bereits auf dem programmierten Startkanal, zum Beispiel $SK1$, eine Gesprächsverbindung aufgebaut werden kann, ohne daß überhaupt der Abastvorgang der Funkkanäle begonnen werden mußte.

**Ansprüche**

1. Funkverfahren für schnurlose Telefone, die aus je einem Basisapparat und je einem Handapparat bestehen und für die eine vorgegebene Zahl von Funkkanälen für die Verbindung zwischen je einem Basisapparat und einem zugehörigen Handapparat vorhanden ist, dadurch gekennzeichnet, daß zwecks Erhöhung der Zahl (A) der vorhandenen Funkkanäle auf eine Zahl (B) für jedes schnurlose Telefon (ST) ein individueller Startkanal (SK) aus der Kodenummer (N) des betreffenden schnurlosen Telefons entsprechend der Beziehung
$$SK = N \cdot modB$$
ermittelt wird und daß jedes schnurlose Telefon von seinem individuellen Startkanal ausgehend nur A Funkkanäle abtastet und einen freien Funkkanal für die Verbindung auswählt.

2. Funkverfahren nach Anspruch 1, dadurch gekennzeichnet, daß bei einem schnurlosen Telefon (ST) mit eingebauten Mikrorechner, in welchem die Kodenummer des betreffenden schnurlosen Telefons programmiert und gespeichert ist, die Beziehung $SK = N \cdot modB$ gespeichert ist und daß der Mikrorechner an Hand der vorstehenden Beziehung und der Kodenummer automatisch den individuellen Startkanal (SK1) ermittelt und speichert.

EP 0 317 708 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | NACHRICHTENTECHNISCHE ZEITSCHRIFT N.T.Z., Band 38, Nr. 7, Juli 1985, Seiten 468-471, Berlin, DE; H.P. BAUER: "Schnurloses Telefon für den 900-MHz-Bereich" * Insgesamt * | 1 | H 04 M 1/72 H 04 Q 7/04 H 04 B 7/26 |
| A,D | Idem --- | 2 | |
| Y | US-A-4 622 695 (MOTOROLA) * Zusammenfassung; Spalte 1, Zeile 40 - Spalte 2, Zeile 50; Spalte 4, Zeilen 1-33; Anspruch 1 * | 1 | |
| A | --- | 2 | |
| A | EP-A-0 185 138 (R. BOSCH) * Zusammenfassung; Anspruch 1 * ----- | 1,2 | |

RECHERCHIERTE SACHGEBIETE (Int. Cl.4)

H 04 M
H 04 Q

**Der vorliegende Recherchenbericht wurde für alle Patentansprüche erstellt**

| Recherchenort | Abschlußdatum der Recherche | Prüfer |
|---|---|---|
| DEN HAAG | 15-03-1989 | GASTALDI G.L. |